# EUROPEAN PATENT APPLICATION

(11) **EP 4 632 005 A1**
(43) Date of publication of application: **15.10.2025**
(21) Application number: 24914475.9
(22) Date of filing: 21.03.2024
(51) Int. Cl.: C08L 63/02, C08K 3/38, C08K 3/22, C08K 7/00, C08K 9/04, C08J 5/18

(54) **HIGH-THERMAL-CONDUCTIVITY INSULATING RESIN COMPOSITION AND PREPARATION METHOD THEREFOR, AND HIGH-THERMAL-CONDUCTIVITY INSULATING FILM**

(30) Priority: 01.03.2024 CN 202410235031
(71) Applicant: Zhejiang TC Ceramics Electronic Co., Ltd., Jiaxing, Zhejiang 314001 (CN)
(72) Inventor: HUANG, Shidong, Jiaxing, Zhejiang 314001 (CN); WANG, Gufeng, Jiaxing, Zhejiang 314001 (CN); WANG, Guosheng, Jiaxing, Zhejiang 314001 (CN)
(74) Representative: Valet Patent Services Limited
(86) International application number: PCT/CN2024/082854
(87) International publication number: WO 2025/179649

(57) **Abstract**

The present disclosure relates to the technical field of thermal-conductivity materials, in particular to a high-thermal-conductivity insulating resin composition and a preparation method thereof, and a high-thermal-conductivity insulating film. The high-thermal-conductivity insulating resin composition, includes the following components in parts by weight: 40-80 parts of epoxy resin and 20-60 parts of thermal-conductivity fillers. The thermal-conductivity fillers include a composite of tabular corundum and cubic boron nitride, cubic boron arsenide, and flaky hexagonal boron nitride. According to the high-thermal-conductivity insulating resin composition, the complete thermal-conductivity network is established through the flaky and spherical particle thermal-conductivity fillers with different particle sizes, and the designed epoxy resin-thermal-conductivity filler system has high thermal-conductivity coefficient, shows high thermal-conductivity performance and good insulativity, and meanwhile can overcome the defects of poor mechanical performance and thermal resistance of traditional thermal-conductivity films.

## Description

### TECHNICAL FIELD

The present disclosure relates to the technical field of thermal-conductivity materials, in particular to a high-thermal-conductivity insulating resin composition and a preparation method thereof, and a high-thermal-conductivity insulating film.

### BACKGROUND ART

In recent years, the microelectronics integration and assembly technology has developed rapidly. Electronic devices and components have been increasingly miniaturized and multi-functional. Their operating frequencies have increased sharply, and heat generated during operation has been accumulated rapidly, resulting in continuous rise in ambient temperature. If the accumulated heat cannot be diffused outward in time, it will greatly affect the use reliability of the devices and components, thereby shortening their service life. Therefore, in order to ensure the stable and efficient operation of the devices and components, how to dissipate heat in time has become an urgent problem to be solved in the field of microelectronics packaging. At present, heat is generally dissipated in time through thermal-conductivity materials with high thermal-conductivity performance, so as to ensure the normal operation of instruments and devices. Polymer-based thermal-conductivity composites are most widely used due to their excellent processability and relatively low cost.

Epoxy resin has become the most widely used polymer matrix due to its excellent electric insulation performance, thermal performance and mechanical performance, as well as a series of advantages such as simple molding process, low viscosity and small cure-molding shrinkage rate. However, the thermal conductivity of the epoxy resin is lower (0.18 W/m.K), and usually thermal-conductivity fillers need to be added to improve the thermal conductivity of the composites. There are mainly two ways to improve the thermal-conductivity performance of a thermal-conductivity film: 1) a molecular structure of an epoxy resin polymer material is adjusted to reduce the defects such as the incoordination between molecular vibration and lattice vibration, so as to achieve high crystallinity or orientation, and ultimately reduce phonon scattering; and 2) the epoxy resin is filled with high-thermal-conductivity particles such as boron nitride, silicon nitride and aluminium nitride, where the boron nitride is the most commonly used filler.

A Chinese patent with publication number CN 109280332 A discloses a boron nitride/epoxy resin thermal-conductivity insulating composite. As recorded in the application of this invention patent, a surface of boron nitride is modified with a silane coupling agent, and then epoxy resin is filled with modified flaky hexagonal boron nitride micro-powder and cubic boron nitride micro-powder at a certain ratio. The thermal-conductivity performance of the obtained composite is improved to a certain extent. However, the problem of the smaller increase in thermal conductivity still exists.

In order to further improve the thermal conductivity of the composite, a Chinese patent with publication number CN 111500019 A discloses a high-thermal-conductivity insulating epoxy resin material modified based on BN-Al2O3 and a preparation method thereof. By modifying a surface of BN-Al2O3 and grafting epoxy groups onto the surface, BN-Al2O3 can be integrated into molecular chains of epoxy resin, thereby enhancing the compatibility and dispersity of nano-Al2O3 and BN with the epoxy resin, and endowing the epoxy resin with excellent insulativity and thermal-conductivity performance. However, due to the introduction of excessive organic reagents, pollution of chemical reagents exists while surface modification is preformed, and therefore environmental friendliness is low. Moreover, the thermal conductivity of the modified composite only ranges from 0.542 W/m.K to 0.815 W/m.K.

### SUMMARY

The present disclosure provides a high-thermal-conductivity insulating resin composition and a preparation method thereof, and a high-thermal-conductivity insulating film, so as to overcome the defect that in the prior art, the thermal conductivity of a boron nitride-dominant thermal-conductivity filler-epoxy resin system is lower due to an imperfectly-established thermal-conductivity network, and meanwhile, overcome the defects of poor mechanical performance and thermal resistance of traditional thermal-conductivity films.

In order to achieve the above objectives, the present disclosure provides the following technical solution:
A high-thermal-conductivity insulating resin composition, includes the following components in parts by weight: 40-80 parts of epoxy resin and 20-60 parts of thermal-conductivity fillers. The thermal-conductivity fillers include a composite of tabular corundum and cubic boron nitride, cubic boron arsenide, and flaky hexagonal boron nitride.

The inventor of the present application established a thermal-conductivity system by selecting different thermal-conductivity fillers with different morphologies, where the tabular corundum is of a spherical particle structure, the cubic boron nitride is of a nanoflake structure, the cubic boron arsenide is of a spherical particle structure, and the hexagonal boron nitride is of a flaky structure. Thermal-conductivity channels in a horizontal direction are established by fusing spherical particles and flakes and orienting the flaky thermal-conductivity fillers in the horizontal direction; and a horizontal thermal-conductivity network is perfected by filling gaps of the thermal-conductivity fillers with the spherical particles, meanwhile, a bridging effect is achieved, and thermal-conductivity channels may be established in a perpendicular direction, such that the establishment of the thermal-conductivity system is perfected in both the horizontal direction and the perpendicular direction.

Furthermore, the cubic boron nitride, as the most commonly used thermal-conductivity filler, has the advantages of high thermal-conductivity coefficient and stable thermal transfer, however, it is likely to crack or break during use due to its high brittleness, affecting the stability and durability of the thermal-conductivity system. Thus, the above problem of the cubic boron nitride can be solved by compounding the cubic boron nitride and the tabular corundum. In addition, the tabular corundum and the cubic boron nitride are compounded in advance, one kind of flakes and one kind of spherical particles fuse together accordingly, interface resistance between different thermal-conductivity materials is reduced, uniform distribution of the tabular corundum and the cubic boron nitride in the thermal-conductivity system can be achieved, and stereoscopic decentralized distribution of the thermal-conductivity system is achieved, thereby preventing local concentration phenomena such as inter-flake overlapping and inter-particle bonding; and meanwhile the diversified thermal-conductivity system can be established, which is beneficial to improving the dispersity and stability of the thermal-conductivity materials.

Thus, the compressive strength and crack-resistant strength of the whole thermal-conductivity system can be driven to rise uniformly by the characteristics of high compressive strength, high toughness, and high crack resistance due to uniform distribution of the tabular corundum, such that the problem of collapse at a certain position is not likely to occur.

In addition, a ratio of the thermal-conductivity fillers to the epoxy resin follows the principle that the thermal-conductivity fillers can be uniformly wrapped by the epoxy resin after compounding, and the thermal-conductivity performance of the composition can be improved by adding the thermal-conductivity fillers; and in a case that the use amount of the thermal-conductivity fillers is excessive, the thermal-conductivity fillers cannot be uniformly wrapped by a small amount of the epoxy resin, leading to the incapability to forming a uniform composition. Thus, the uniform composition with good thermal-conductivity performance can be obtained by controlling the epoxy resin at 40-80 parts and the thermal-conductivity fillers at 20-60 parts and keeping them in such ratio.

In conclusion, one kind of flakes and one kind of spherical particles can fuse together by selecting a plurality of thermal-conductivity fillers with different morphologies, the uniform thermal-conductivity system with the thermal-conductivity channels in both the horizontal direction and the perpendicular direction and the diversified structure can be established, the thermal-conductivity coefficient of the composition is greatly improved, and meanwhile the mechanical performance of the prepared composition is remarkably improved due to the tabular corundum.

Preferably, a mean particle size of the tabular corundum ranges from 1 µm to 3 µm, a mean particle size of the cubic boron nitride ranges from 100 nm to 400 nm, a mean particle size of the cubic boron arsenide ranges from 100 nm to 300 nm, and a mean particle size of the flaky hexagonal boron nitride ranges from 5 µm to 15 µm.

More preferably, a mean particle size of the tabular corundum ranges from 1 µm to 3 µm, a mean particle size of the cubic boron nitride ranges from 200 nm to 400 nm, a mean particle size of the cubic boron arsenide ranges from 150 nm to 300 nm, and a mean particle size of the flaky hexagonal boron nitride ranges from 5 µm to 15 µm.

More preferably, a mean particle size of the tabular corundum is 2 µm, a mean particle size of the cubic boron nitride ranges from 300 nm to 350 nm, a mean particle size of the cubic boron arsenide ranges from 200 nm to 300 nm, and a mean particle size of the hexagonal boron nitride ranges from 10 µm to 15 µm.

A particle size of flaky hexagonal boron nitride flakes is close to a thickness of a film formed after the composition is cured, which plays a penetration effect in the film, thereby greatly improving the thermal-conductivity coefficient of the thermal-conductivity film. Gaps of the system can be filled with the cubic boron nitride and cubic boron arsenide with the smaller particle sizes to the maximum degree at their respective particle sizes, and interface thermal resistance between resin and powder is reduced, thereby improving the thermal-conductivity coefficient.

Molecular particle sizes of the cubic boron nitride and the cubic boron arsenide are both at a nanoscale, and molecular particle sizes of the tabular corundum and the flaky hexagonal boron nitride are both at a micron-scale. A multilayer stereoscopic structure can be established by combining nanoscale and micron-scale particles, the nanoscale particles are beneficial to improving the interface activity and reactivity of materials, the micron-scale particles have a larger surface area, and such multilayer structure is beneficial to improving the thermal-conductivity coefficient of the thermal-conductivity system. In addition, the thermal-conductivity fillers with different particle sizes can exert their respective advantages after being blended, and the large specific surface area and reaction activity of the nanoscale particles and the high mechanical strength of the micron-scale particles can be utilized; and the large specific surface area and reaction activity are beneficial to improving the interaction between the thermal-conductivity system and the epoxy resin, thereby increasing the contact area with the epoxy resin, while the high mechanical strength can improve the structural stability of the thermal-conductivity system, and the overall thermal-conductivity performance of the resin composition can be collaboratively enhanced by combining the both.

In addition, it is necessary to purchase commercially-available finished products and finish the same to obtain small particles with a mean particle size ranging from 1 µm to 3 µm in order to achieve the particle size of the tabular corundum meeting the film preparation requirement of the present disclosure, and the difficulty in film forming will be caused by the use of large particles, leading to poor flatness of a prepared film.

Preferably, the composite of the tabular corundum and the cubic boron nitride is formed by compounding the tabular corundum with a larger particle size as a core and the cubic boron nitride with a smaller particle size as a shell.

Due to higher compressive capacity and crack-resistant capacity of the tabular corundum, the composite prepared by adopting the tabular corundum as the core has high compressive capacity and crack-resistant capacity, and the phenomenon of collapse of a whole core-shell structure caused by core breakage is avoided, thereby ensuring further reinforcement of the structure of the thermal-conductivity system.

Preferably, the cubic boron nitride is obtained by modifying dopamine hydrochloride.

After the flaky hexagonal boron nitride penetrates through the thermal-conductivity system, in a case that the cubic boron nitride with the larger specific surface area, as another flaky filler, fuses with the epoxy resin, the frequent problem, namely the problem of poor compatibility, between inorganic fillers and organic fillers is likely to occur. After the cubic boron nitride is modified with the dopamine hydrochloride, nano-polydopamine is generated on a surface of the cubic boron nitride, B atoms and N atoms of the cubic boron nitride alternately form a hexagonal annular mesh structure, cubic boron nitride nanoflakes easily interact with a benzene ring structure of the polydopamine under the actions of pi-pi bond conjugation and Van der Waals' force due to their larger specific surface area, such that the polydopamine is firmly bound to the surface of the cubic boron nitride. Polydopamine molecules are well compatible to the epoxy resin, which can assist the cubic boron nitride in fusing with the epoxy resin, so as to obtain the uniform composition.

Furthermore, in a case that the core-shell structure of the tabular corundum and the cubic boron nitride is formed, the compatibility between the cubic boron nitride and the epoxy resin is more important, such that it is critical to enhance the fusion between the cubic boron nitride and the epoxy resin through modification.

Preferably, a mass ratio of the cubic boron nitride to the tabular corundum in the composite of the cubic boron nitride and the tabular corundum is 1: (0.1-0.5).

Preferably, a mass ratio of the composite of the cubic boron nitride and the tabular corundum to the cubic boron arsenide to the flaky hexagonal boron nitride ranges from (1: 1: 2) to (3: 3: 2).

Preferably, the high-thermal-conductivity insulating resin composition further includes 1-4 parts of curing agent.

The present disclosure further provides a preparation method of a high-thermal-conductivity insulating resin composition, including the following steps:
S1, dispersing cubic boron nitride in absolute ethyl alcohol, adding a dopamine hydrochloride solution under stirring, reacting at 50-70°C for 12-24 hours, and filtering after centrifugation, to obtain modified cubic boron nitride;
S2, dispersing the modified cubic boron nitride in water, adding dispersion liquid of tabular corundum under stirring, and filtering after high-speed stirring, to obtain a composite of the tabular corundum and the cubic boron nitride; and
S3, heating and uniformly stirring epoxy resin, the composite of the tabular corundum and the cubic boron nitride, cubic boron arsenide, and hexagonal boron nitride, adding a curing agent after cooling to a room temperature, performing grinding and suction filtration after stirring to uniform, and uniformly stirring again, to obtain film liquid, namely the high-thermal-conductivity insulating resin composition.

The inventor of the present application obtained a preliminary premixed composite by modifying the cubic boron nitride and compounding the same with the tabular corundum, and prepared the high-thermal-conductivity insulating resin composition by simply mixing and heating the preliminary premixed composite, the cubic boron arsenide, the flaky hexagonal boron nitride, and the epoxy resin. The whole solution has low dependence on devices, can be completed without specific devices, and is low in cost and easy to apply and popularize widely.

Preferably, stirring is performed under vacuum.

Due to vacuum stirring and mixing, bubbles and gases in a mixture can be removed during mixing, the mixture is more uniform, and influences of gas holes and the bubbles on the composition are lowered. Meanwhile, the fluidity of mixed components can be improved, and the components are highly mixed uniformly, so as to obtain the more stable and uniform composition.

More preferably, a vacuum degree of vacuum stirring is -95 KPa.

Preferably, in the step S3, a hole diameter of a filter net used for suction filtration is 100 µm.

If a filtration hole diameter is too small, resin components cannot be filtered. Therefore, a desired filtration effect can be achieved in a case that the hole diameter is kept at 100 µm, that is, the resin composition obtained by compounding the thermal-conductivity fillers and the resin can be filtered smoothly, and powder with a too large particle size (greater than 100 µm) therein can be sieved out during this process.

Preferably, in the step S3, a heating temperature ranges from 50°C to 60°C.

More preferably, a heating temperature is 55°C.

The present disclosure further provides a high-thermal-conductivity insulating film obtained by thermo-curing the above high-thermal-conductivity insulating resin composition or the high-thermal-conductivity insulating resin composition prepared through the above method.

A polytetrafluoroethylene plate is uniformly coated with the high-thermal-conductivity insulating resin composition, and put in a vacuum drying box to be cured, to obtain the high-thermal-conductivity insulating film. The obtained high-thermal-conductivity insulating film is subjected to performance characterization, its thermal-conductivity coefficient can reach 6.30 W/m.K, its thermal diffusion coefficient is 3.42 m2/s, and the high-thermal-conductivity insulating film has good insulativity, which can meet the requirements of current actual production.

Therefore, the present disclosure has the following beneficial effects:
(1) According to the high-thermal-conductivity insulating resin composition, the complete thermal-conductivity network is established through the flaky and spherical particle thermal-conductivity fillers with different particle sizes, and the designed epoxy resin-thermal-conductivity filler system has high thermal-conductivity coefficient and shows high thermal-conductivity performance and good insulativity.
(2) In the design of the present disclosure, the tabular corundum and the cubic boron nitride are compounded in advance, interface resistance between different thermal-conductivity materials can be effectively reduced, and stereoscopic decentralized distribution of the thermal-conductivity system is achieved, thereby preventing local concentration phenomena such as inter-flake overlapping and inter-particle bonding; meanwhile the diversified thermal-conductivity system can be established, which is beneficial to improving the dispersity and stability of the thermal-conductivity materials; and the introduced tabular corundum can improve the mechanical performance and thermal resistance of the prepared thermal-conductivity film.
(3) In the design of the present disclosure, the micron-scale and nanoscale thermal-conductivity fillers are compounded, the multilayer stereoscopic structure can be established through the combination of the nanoscale and micron-scale particles, and the overall thermal-conductivity performance of the resin composition can be collaboratively enhanced through the combination of the both.
(4) The high-thermal-conductivity insulating resin composition is prepared through simple mixing and heating, and the whole solution has low dependence on devices, and is low in cost and easy to apply and popularize widely.
(5) The high-thermal-conductivity insulating film provided in the present disclosure is obtained by thermo-curing the high-thermal-conductivity insulating resin composition, has good thermal-conductivity performance and insulativity, and can be widely applied to the field of microelectronics integration.

### BRIEF DESCRIPTION OF THE DRAWINGS

FIG. 1 is a comparison diagram of a high-thermal-conductivity insulating film in a cracking state; and
FIG. 2 is a comparison diagram of a high-thermal-conductivity insulating film in a non-cracking state.

### DETAILED DESCRIPTION OF THE EMBODIMENTS

The present disclosure will be further described below with reference to specific examples. Those ordinarily skilled in the art can implement the present disclosure based on these descriptions. Furthermore, the examples of the present disclosure involved in the following description are merely a part of examples of the present disclosure, and not all of the examples. Therefore, all other examples obtained by those ordinarily skilled in the art based on the examples in the present disclosure without involving inventive efforts should fall within the scope of protection of the present disclosure.

### [Example]

### Example 1

In this embodiment, a mean particle size of tabular corundum is 2 µm, a mean particle size of cubic boron nitride is 320 nm, a mean particle size of cubic boron arsenide is 275 nm, and a mean particle size of flaky hexagonal boron nitride is 12 µm.

S1, the cubic boron nitride was dispersed in absolute ethyl alcohol, a 2 g/L dopamine hydrochloride solution was added under stirring, the materials reacted at 60°C for 12 hours, and the materials were filtered after centrifugation, to obtain modified cubic boron nitride.

S2, 1 g of modified cubic boron nitride was dispersed in water, 250 mL of 2 g/L dispersion liquid of tabular corundum was added under stirring, the materials were vacuum-stirred at -95 KPa and a rotating speed of 2,000 r/min for 6 hours, and the materials were filtered, to obtain a composite of the tabular corundum and the cubic boron nitride. The use amount of the required composite was prepared by increasing or decreasing the above proportions.

S3, 60 g of bisphenol A epoxy resin, 10 g of the composite of the tabular corundum and the cubic boron nitride, 10 g of cubic boron arsenide, and 20 g of hexagonal boron nitride were vacuum-stirred at 55°C and -95 KPa for 1 hour and cooled to a room temperature, then 1 g of dicyandiamide curing agent was added, the materials were subjected to grinding and suction filtration after being stirred for 20 minutes, and the materials were stirred for another 15 minutes, to obtain film liquid, namely a high-thermal-conductivity insulating resin composition.

S4, a polytetrafluoroethylene plate was uniformly coated with the high-thermal-conductivity insulating resin composition, and put in a vacuum drying box at 80°C to be dried for 6 hours to be cured into a high-thermal-conductivity insulating film.

### Example 2

This example is basically the same as Example 1, except that:
S2, 1 g of modified cubic boron nitride was dispersed in water, 150 mL of 2 g/L dispersion liquid of tabular corundum was added under stirring, the materials were vacuum-stirred at -95 KPa and a rotating speed of 2,000 r/min for 6 hours, and the materials were filtered, to obtain a composite of the tabular corundum and the cubic boron nitride. The use amount of the required composite was prepared by increasing or decreasing the above proportions.

### Example 3

This example is basically the same as Example 1, except that: S2, 1 g of modified cubic boron nitride was dispersed in water, 50 mL of 2 g/L dispersion liquid of tabular corundum was added under stirring, the materials were vacuum-stirred at -95 KPa and a rotating speed of 2,000 r/min for 6 hours, and the materials were filtered, to obtain a composite of the tabular corundum and the cubic boron nitride. The use amount of the required composite was prepared by increasing or decreasing the above proportions.

### Example 4

This example is basically the same as Example 1, except that:
S3, 60 g of bisphenol A epoxy resin, 6 g of the composite of the tabular corundum and the cubic boron nitride, 9 g of cubic boron arsenide, and 25 g of flaky hexagonal boron nitride were vacuum-stirred at 55°C and -95 KPa for 1 hour and cooled to a room temperature, then 1 g of dicyandiamide curing agent was added, the materials were subjected to grinding and suction filtration after being stirred for 20 minutes, and the materials were stirred for another 15 minutes, to obtain film liquid, namely a high-thermal-conductivity insulating resin composition.

### Example 5

This example is basically the same as Example 1, except that:
S3, 60 g of bisphenol A epoxy resin, 15 g of the composite of the tabular corundum and the cubic boron nitride, 15 g of cubic boron arsenide, and 10 g of flaky hexagonal boron nitride were vacuum-stirred at 55°C and -95 KPa for 1 hour and cooled to a room temperature, then 1 g of dicyandiamide curing agent was added, the materials were subjected to grinding and suction filtration after being stirred for 20 minutes, and the materials were stirred for another 15 minutes, to obtain film liquid, namely a high-thermal-conductivity insulating resin composition.

### Example 6

This example is basically the same as Example 1, except that:
S3, 80 g of bisphenol A epoxy resin, 5 g of the composite of the tabular corundum and the cubic boron nitride, 5 g of cubic boron arsenide, and 10 g of flaky hexagonal boron nitride were vacuum-stirred at 55°C and -95 KPa for 1 hour and cooled to a room temperature, then 1 g of dicyandiamide curing agent was added, the materials were subjected to grinding and suction filtration after being stirred for 20 minutes, and the materials were stirred for another 15 minutes, to obtain film liquid, namely a high-thermal-conductivity insulating resin composition.

### Example 7

This example is basically the same as Example 1, except that:
S3, 70 g of bisphenol A epoxy resin, 7.5 g of the composite of the tabular corundum and the cubic boron nitride, 7.5 g of cubic boron arsenide, and 15 g of flaky hexagonal boron nitride were vacuum-stirred at 55°C and -95 KPa for 1 hour and cooled to a room temperature, then 1 g of dicyandiamide curing agent was added, the materials were subjected to grinding and suction filtration after being stirred for 20 minutes, and the materials were stirred for another 15 minutes, to obtain film liquid, namely a high-thermal-conductivity insulating resin composition.

### Example 8

This example is basically the same as Example 1, except that:
S3, 50 g of bisphenol A epoxy resin, 12.5 g of the composite of the tabular corundum and the cubic boron nitride, 12.5 g of cubic boron arsenide, and 25 g of flaky hexagonal boron nitride were vacuum-stirred at 55°C and -95 KPa for 1 hour and cooled to a room temperature, then 1 g of dicyandiamide curing agent was added, the materials were subjected to grinding and suction filtration after being stirred for 20 minutes, and the materials were stirred for another 15 minutes, to obtain film liquid, namely a high-thermal-conductivity insulating resin composition.

### Example 9

This example is basically the same as Example 1, except that:
S3, 40 g of bisphenol A epoxy resin, 15 g of the composite of the tabular corundum and the cubic boron nitride, 15 g of cubic boron arsenide, and 30 g of flaky hexagonal boron nitride were vacuum-stirred at 55°C and -95 KPa for 1 hour and cooled to a room temperature, then 1 g of dicyandiamide curing agent was added, the materials were subjected to grinding and suction filtration after being stirred for 20 minutes, and the materials were stirred for another 15 minutes, to obtain film liquid, namely a high-thermal-conductivity insulating resin composition.

### Example 10

This example is basically the same as Example 1, except that:
In this embodiment, a mean particle size of tabular corundum is 1 µm, a mean particle size of cubic boron nitride is 360 nm, a mean particle size of cubic boron arsenide is 120 nm, and a mean particle size of flaky hexagonal boron nitride is 8 µm.

### Example 11

This example is basically the same as Example 1, except that:
In this embodiment, a mean particle size of tabular corundum is 3 µm, a mean particle size of cubic boron nitride is 320 nm, a mean particle size of cubic boron arsenide is 180 nm, and a mean particle size of flaky hexagonal boron nitride is 15 µm.

### Comparative Example 1

This comparative example is basically the same as Example 1, except that:
S3, 60 g of bisphenol A epoxy resin and 40 g of the composite of the tabular corundum and the cubic boron nitride were vacuum-stirred at 55°C and -95 KPa for 1 hour and cooled to a room temperature, then 1 g of dicyandiamide curing agent was added, the materials were subjected to grinding and suction filtration after being stirred for 20 minutes, and the materials were stirred for another 15 minutes, to obtain film liquid, namely a high-thermal-conductivity insulating resin composition.

### Comparative Example 2

This comparative example is basically the same as Example 1, except that:
S3, 60 g of bisphenol A epoxy resin, 10 g of the composite of the tabular corundum and the cubic boron nitride, and 30 g of cubic boron arsenide were vacuum-stirred at 55°C and -95 KPa for 1 hour and cooled to a room temperature, then 1 g of dicyandiamide curing agent was added, the materials were subjected to grinding and suction filtration after being stirred for 20 minutes, and the materials were stirred for another 15 minutes, to obtain film liquid, namely a high-thermal-conductivity insulating resin composition.

### Comparative Example 3

This comparative example is basically the same as Example 1, except that:
S3, 60 g of bisphenol A epoxy resin, 10 g of the composite of the tabular corundum and the cubic boron nitride, and 30 g of flaky hexagonal boron nitride were vacuum-stirred at 55°C and -95 KPa for 1 hour and cooled to a room temperature, then 1 g of dicyandiamide curing agent was added, the materials were subjected to grinding and suction filtration after being stirred for 20 minutes, and the materials were stirred for another 15 minutes, to obtain film liquid, namely a high-thermal-conductivity insulating resin composition.

### Comparative Example 4

This comparative example is basically the same as Example 1, except that:
Compounding in S2 was omitted; and S3, 60 g of bisphenol A epoxy resin, 6.7 g of tabular corundum, 3.3 g of cubic boron nitride, 10 g of cubic boron arsenide, and 20 g of flaky hexagonal boron nitride were vacuum-stirred at 55°C and -95 KPa for 1 hour and cooled to a room temperature, then 1 g of dicyandiamide curing agent was added, the materials were subjected to grinding and suction filtration after being stirred for 20 minutes, and the materials were stirred for another 15 minutes, to obtain film liquid, namely a high-thermal-conductivity insulating resin composition.

### Comparative Example 5

This comparative example is basically the same as Example 1, except that: the modification step in S1 was omitted, and compounding was directly performed.

### [Performance test]

### 1. Influences of different ratios of cubic boron nitride to tabular corundum

In order to verify influences of an addition ratio of tabular corundum nanocrystals on the thermal stability and compressive capacity of the formed high-thermal-conductivity insulating film, the high-thermal-conductivity insulating films prepared in Examples 1-3 were applied to a double-sided copper-clad plate vacuum hot-pressing experiment (upper copper foil and lower copper foil were oxygen-free copper at 0.3 mm and 0.8 mm respectively, and hot-pressing time was unified as 1 hour), and a hot-pressed copper-clad carrier plate was scanned through an ultrasonic scanner, so as to determine whether the high-thermal-conductivity insulating film in the middle cracked or not. Hot-pressing results are as follows:

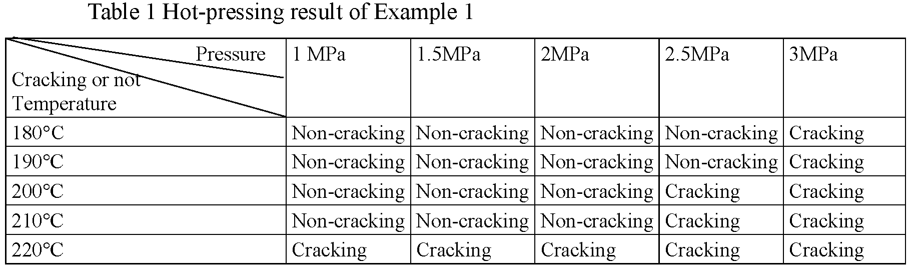

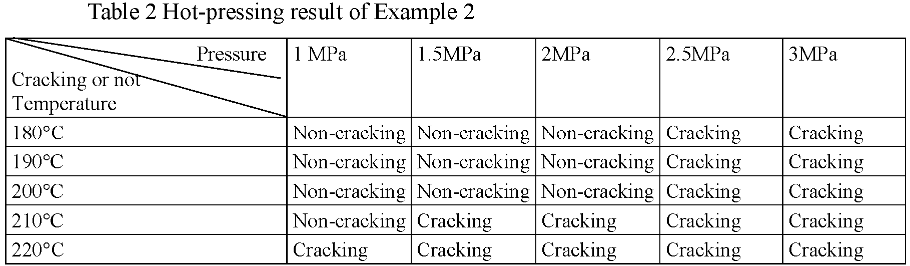

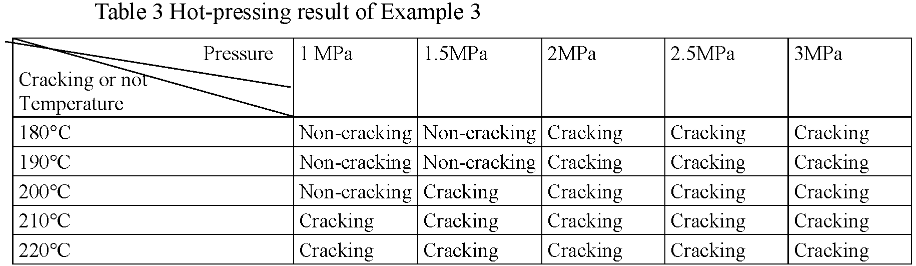

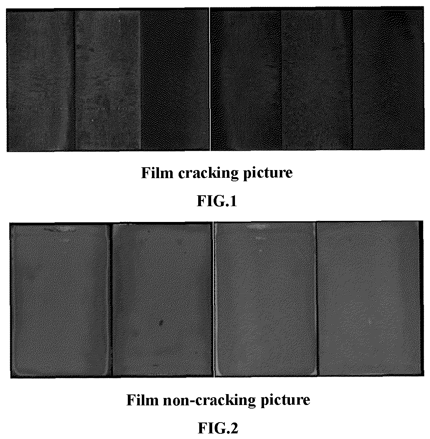

It can be shown from Tables 1-3 that by comparing film cracking effects in FIGS. 1-2, it is obvious that the whole non-cracking film is smooth and flat and free of gaps, while the film is likely to crack seriously at a high temperature and high pressure, affecting the service life of the film. When a mass ratio of the cubic boron nitride to the tabular corundum is 1: 0.5, the high-thermal-conductivity insulating film shows superior thermal stability and compressive capacity, thereby ensuring that the film does not crack at 190°C and 2.5 MPa.

### 2. Influences of different proportions of thermal-conductivity fillers

After an optimum proportion of the cubic boron nitride to the tabular corundum is determined, the influences of the proportions of the thermal-conductivity fillers on the high-thermal-conductivity insulating film are studied on this basis. Thermal-conductivity coefficients, thermal diffusion coefficients, and insulativity of the films obtained in Examples 1, 4, and 5 are tested, and results are shown in Table 4.

**Table 4 Test results of films at different proportions of thermal-conductivity fillers**

| | Thermal-conductivity coefficient | Thermal diffusion coefficient (m²/s) | Insulativity test | |
|---|---|---|---|---|
| Example 1 | 4.67 | 2.76 | 4KV, 3S | OK |
| Example 4 | 4.35 | 2.43 | 4KV, 3S | OK |
| Example 5 | 3.92 | 2.34 | 4KV, 3S | OK |

It can be shown from data in the table that the thermal-conductivity coefficients and the thermal diffusion coefficients of the films gradually decrease as the proportion of the total part of the tabular corundum and the cubic boron nitride in the system increases, which is related to the fact that the thermal-conductivity performance of the tabular corundum is inferior to that of the boron nitride, and the tabular corundum is added mainly to improve the mechanical performance and thermal resistance of the film.

### 3. Influences of different ratios of fillers to epoxy resin

After an optimum proportion of the thermal-conductivity fillers is determined, the influences of different ratios of the fillers to the resin on the high-thermal-conductivity insulating film are studied on this basis. Thermal-conductivity coefficients, thermal diffusion coefficients, and insulativity of the films obtained in Examples 1 and 6 to 9 are tested, and results are shown in Table 5.

**Table 5 Test results of films at different filler ratios**

| | Total amount of filler/g | Resin content/g | Thermal-conductivity coefficient (W/m.K) | Thermal diffusion coefficient (m²/s) | Insulativity test | |
|---|---|---|---|---|---|---|
| Example 6 | 20 | 80 | 2.52 | 1.89 | 4KV, 3S | OK |
| Example 7 | 30 | 70 | 3.73 | 2.23 | 4KV, 3S | OK |
| Example 1 | 40 | 60 | 4.67 | 2.76 | 4KV, 3S | OK |
| Example 8 | 50 | 50 | 5.92 | 3.25 | 4KV, 3S | OK |
| Example 9 | 60 | 40 | 6.30 | 3.42 | 4KV, 3S | OK |

It can be shown from data in the table that various kinds of performance of the film can be effectively improved as the use amount of the fillers increases. In a case that the use amount ratio of the fillers to the resin is greater than 2: 3, various kinds of performance of the film can be at a higher level; and the performance of the film is continuously improved as the use amount of the fillers continues to increase.

### 4. Influences of establishment of thermal-conductivity network

Thermal-conductivity coefficients, thermal diffusion coefficients, and insulativity of the films obtained in Examples 1 and Comparative Examples 1 to 5 are tested, and results are shown in Table 6.

**Table 6 Test results of films under different thermal-conductivity networks**

| | Thermal-conductivity coefficient (W/m.K) | Thermal diffusion coefficient (m²/s) | Stability | Insulativity test | |
|---|---|---|---|---|---|
| Example 1 | 4.67 | 2.76 | Better stability | 4KV, 3S | OK |
| Example 10 | 4.56 | 2.65 | Better stability | 4KV, 3S | OK |
| Example 11 | 4.83 | 2.90 | Better stability | 4KV, 3S | OK |
| Comparative Example 1 | 3.25 | 2.02 | Good stability | 4KV, 3S | OK |
| Comparative Example 2 | 4.15 | 2.21 | Better stability | 4KV, 3S | OK |
| Comparative Example 3 | 4.34 | 2.34 | Better stability | 4KV, 3S | OK |
| Comparative Example 4 | 4.01 | 2.15 | Stability reduced | 4KV, 3S | OK |
| Comparative Example 5 | 3.89 | 2.10 | Better stability | 4KV, 3S | OK |

It can be shown from data in the table that the cubic boron arsenide and/or the flaky hexagonal boron nitride are/is unavailable in Comparative Examples 1 to 3, the film is in lack of the most crucial thermal-conductivity support material due to the lack of the flaky hexagonal boron nitride, and the performance, especially the thermal-conductivity performance, of the film is greatly reduced.

It can be shown by comparing data of Example 1 and Comparative Example 4 that the tabular corundum and the cubic boron nitride are directly added to be mixed with the bisphenol A epoxy resin instead of being compounded in advance, the performance is reduced, and the thermal-conductivity coefficient and the thermal diffusion coefficient are reduced compared with those achieved in a case that the tabular corundum and the cubic boron nitride are added in a premixed state. This is caused by the fact that the dispersity of the thermal-conductivity fillers is reduced due to local concentration caused by inter-flake overlapping and inter-particle bonding during mixing of the thermal-conductivity fillers; and the fillers at all positions are not uniformly distributed and are bound to each other, the performance of the different fillers cannot be optimized accordingly, the fillers with different morphologies and different particle sizes cannot achieve the optimum collaboration effect, thereby leading to performance reduction.

In conclusion, it can be shown that premixing of the tabular corundum and the cubic boron nitride and mutual mixing of different fillers with different particle sizes are necessary for the establishment integrity of the thermal-conductivity network. The high-thermal-conductivity insulating film prepared in this solution has the thermal-conductivity network with high establishment integrity, and can achieve high thermal conductivity, high insulativity, and high stability at the same time.

## Claims

1. A high-thermal-conductivity insulating resin composition, **characterized by** comprising the following components in parts by weight: 40-80 parts of epoxy resin and 20-60 parts of thermal-conductivity fillers, wherein the thermal-conductivity fillers comprise a composite of tabular corundum and cubic boron nitride, cubic boron arsenide, and flaky hexagonal boron nitride.

2. The high-thermal-conductivity insulating resin composition according to claim 1, **characterized in that**
a mean particle size of the tabular corundum ranges from 1 µm to 3 µm, a mean particle size of the cubic boron nitride ranges from 100 nm to 400 nm, a mean particle size of the cubic boron arsenide ranges from 100 nm to 300 nm, and a mean particle size of the flaky hexagonal boron nitride ranges from 5 µm to 15 µm.

3. The high-thermal-conductivity insulating resin composition according to claim 2, **characterized in that**
the composite of the tabular corundum and the cubic boron nitride is formed by compounding the tabular corundum with a larger particle size as a core and the cubic boron nitride with a smaller particle size as a shell.

4. The high-thermal-conductivity insulating resin composition according to claim 1 or 3, **characterized in that**
the cubic boron nitride is obtained by modifying dopamine hydrochloride.

5. The high-thermal-conductivity insulating resin composition according to claim 1, **characterized in that**
a mass ratio of the cubic boron nitride to the tabular corundum in the composite of the cubic boron nitride and the tabular corundum is 1: (0.1-0.5).

6. The high-thermal-conductivity insulating resin composition according to claim 1 or 2 or 3 or 5, **characterized in that**
a mass ratio of the composite of the cubic boron nitride and the tabular corundum to the cubic boron arsenide to the flaky hexagonal boron nitride ranges from (1: 1: 2) to (3: 3: 2).

7. The high-thermal-conductivity insulating resin composition according to claim 6, **characterized in that**
the high-thermal-conductivity insulating resin composition further comprises 1-4 parts of curing agent.

8. A preparation method of the high-thermal-conductivity insulating resin composition according to any one of claims 1 to 7, **characterized by**
comprising the following steps:
S1, dispersing cubic boron nitride in absolute ethyl alcohol, adding a dopamine hydrochloride solution under stirring, reacting at 50-70°C for 12-24 hours, and filtering after centrifugation, to obtain modified cubic boron nitride;
S2, dispersing the modified cubic boron nitride in water, adding dispersion liquid of tabular corundum under stirring, and filtering after high-speed stirring, to obtain a composite of the tabular corundum and the cubic boron nitride; and
S3, heating and uniformly stirring epoxy resin, the composite of the tabular corundum and the cubic boron nitride, cubic boron arsenide, and flaky hexagonal boron nitride, adding a curing agent after cooling to a room temperature, performing grinding and suction filtration after stirring to uniform, and uniformly stirring again, to obtain film liquid, namely the high-thermal-conductivity insulating resin composition.

9. The method according to claim 8, **characterized in that**
in the step S3, a hole diameter of a filter net used for suction filtration is 100 µm.

10. A high-thermal-conductivity insulating film, **characterized by** being obtained by thermo-curing the high-thermal-conductivity insulating resin composition according to any one of claims 1 to 7 or the high-thermal-conductivity insulating resin composition prepared through the method according to any one of claims 8 to 9.
